# EUROPEAN PATENT APPLICATION

(11) **EP 1 508 353 A1**
(43) Date of publication of application: **23.02.2005**
(21) Application number: 04254801.6
(22) Date of filing: 10.08.2004
(51) Int. Cl.: B01D 27/10

(54) **One piece elastomer relief and anti-drain back valves for fluid filter**

(30) Priority: 22.08.2003 US 645965
(71) Applicant: ArvinMeritor Technology, LLC, Troy, MI 48084 (US)
(72) Inventor: Cline, Steven L., Fayetteville, North Carolina 28306 (US)
(74) Representative: Jones, John Bryn

(57) **Abstract**

A fluid filter includes a housing having a tapping plate with a first aperture. A center tube is arranged in the housing proximate to the tapping plate. The center tube includes a second aperture. An elastomeric valve assembly is arranged between the center tube and the tapping plate. The valve assembly comprises an integrated, one-piece relief valve and anti-drain back valve. The anti-drain back valve is arranged adjacent to the first aperture for selectively blocking the first aperture to prevent fluid from exiting in the side of the filter during pressure drops. The relief valve is arranged adjacent to the second aperture for selectively blocking the second aperture to permit fluid to flow past the relief valve during high pressure conditions such as cold starts.

## Description

### BACKGROUND OF THE INVENTION

This invention relates to a fluid filter such as an oil filter, and more particularly, the invention relates to a relief valve and anti-drain back valve for fluid filters.

Fluid filters such as oil filters typically include one or more valves to regulate the flow of fluid through the filter during various operating conditions. For example, the filter may incorporate an anti-drain back valve to prevent fluid from exiting the inlet side of the filter during a pressure drop thereby carrying debris from the filter element. A filter also may use a relief valve for permitting the fluid to bypass the filter element under high pressures, such as when the oil is very viscous during engine cold starts in oil filter applications.

Many fluid filter valve configurations have been used. One common valve configuration uses a valve arranged near the tapping plate of the filter housing. A moveable piston is arranged adjacent to a fluid aperture. A coil spring biases the fluid piston to a desired position. The fluid piston slides axially relative to a center portion of the filter between open and closed positions. For fluid configurations having a center tube, a seal between the center tube and tapping plate must also be used to prevent fluid from bypassing the filter element. An additional valve is used within the filter to provide further control of the fluid flow through the filter. Additional seals are used with the valve to prevent fluid leakage. As a result, a typical fluid filter uses numerous assembled components that are costly. Furthermore, since so many components are required for the valves, a misalignment may result causing undesired operation of the valve. The spring and piston arrangement result in added length to the filter housing or reduced size of the filter element that may be packaged within the housing to accommodate size and motion of the piston assembly during operation. Therefore, what is needed is a more efficient design for fluid filter valves.

### SUMMARY OF THE INVENTION AND ADVANTAGES

The present invention provides a fluid filter including a housing having an end portion, such as tapping plate, with a first aperture. A center portion, such as a center tube, is arranged in the housing proximate to the end portion. The center portion includes a second aperture. In one embodiment, a valve assembly is arranged between the center portion and the end portion in one example embodiment for creating a seal between the portions. The valve assembly may be constructed from an elastomeric material such as rubber.

The valve assembly comprises an integrated, one-piece relief valve and anti-drain back valve. The anti-drain back valve is arranged adjacent to the first aperture for selectively blocking the first aperture to prevent fluid from exiting the inlet side of the filter during pressure drops. The relief valve is arranged adjacent to the second aperture for selectively blocking the second aperture to permit fluid to flow past the relief valve during high pressure conditions, such as for cold starts in oil filter applications.

In one example embodiment, the valve assembly extends respectively between first and second terminal ends of the relief and at anti-drain back valves. In the example shown, a recess may be arranged between the valves for supporting the valve assembly on the center portion. In this arrangement, the valve assembly also acts as a seal between the center portion and end portion. The inventive arrangement significantly reduces the number of valve assembly components and eliminates the seal typically used between the center portion and end portion. Moreover, the overall size of the valve assembly is reduced, which permits the use of either a smaller filter or a larger filter element.

### BRIEF DESCRIPTION OF THE DRAWINGS

Other advantages of the present invention can be understood by reference to the following detailed description when considered in connection with the accompanying drawings wherein:
Figure 1 is a cross-sectional view of a fluid filter with an example of the inventive valve assembly with integrated relief and anti-drain back valves.
Figure 2A is an enlarged cross-sectional view of the valve assembly shown in Figure 1.
Figure 2B is a top elevational view of the valve assembly shown in Figure 2A.

### DETAILED DESCRIPTION OF THE PREFERRED EMBODIMENT

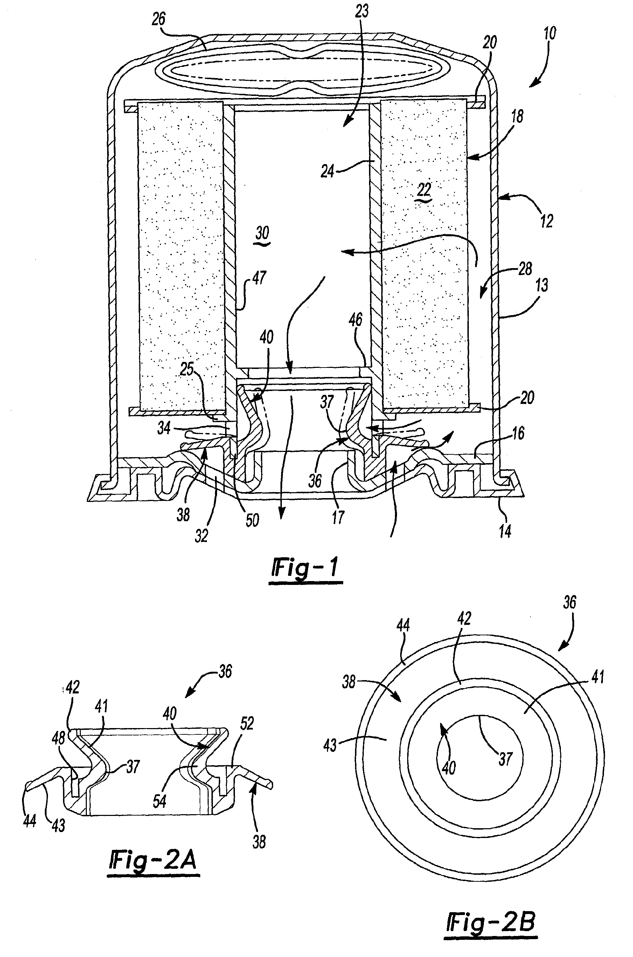

A fluid filter 10 is shown in Figure 1. The filter 10 shown is suitable for use as a vehicle oil filter, however, this invention may be used in any fluid filter application. The filter 10 comprises a housing 12 including a can 13 with a retainer 14 secured to the open end of the can. The housing 12 also includes a tapping plate 16 typically arranged interiorly and adjacent to the retainer 14. The tapping plate 16 includes a central threaded hole 17 for securing the filter 10 to a structure having fluid passages that carry the fluid to and from a desired location such as a vehicle engine.

A filter assembly 18 is arranged within the housing 12. The filter assembly 18 includes end disks 20 having a filter media 22, such as a paper filter element, arranged between the end disk 20 in any suitable manner, which is well known in the art. The filter media 22 may define a central opening 23. Typically, the filter media 22 is a pleated paper element having a center tube 24 inserted into a central opening 23 of the filter media 22 to provide structural support for the pleated paper element. The center tube 24 has a collar 25 for axially locating the center tube 24 relative to the filter assembly 18. A guide 26 is arranged between the filter assembly 18 and the housing 12 to position the filter assembly 18 in a desired manner during assembly of the filter 10.

The filter 10 has an inlet side 28 on one side of the filter media 22 and an outlet side 30 on the opposite side of the filter media 22. For the arrangement shown, the inlet side 28 corresponds to the outside of the filter assembly 18, and the outlet side 30 corresponds to the inside or central opening 23. The retainer 14 and tapping plate 16 include apertures 32 to permit fluid to flow from the structure supporting the filter 10 to the inlet side 28. During normal operation, the fluid flows through the filter media 22 to the central opening 23, which corresponds to the outlet side 30, to remove debris from the fluid. Fluid then flows through the central opening 23 and exits through the threaded hole 17 back through the structure supporting the filter 10. However, it is to be understood that the fluid flow may be other than described above depending upon the application and customer specifications.

It is desirable to incorporate valves within the filter to prevent fluid from draining from the dirty or inlet side 28 of the filter 10 back to the structure supporting the filter 10 during pressure drops. It is also desirable to provide valves within the filter 10 to permit fluid to bypass the filter assembly 18 during high pressure conditions, such as vehicle cold starts at very low temperatures in which the fluid may be very viscous. In the prior art, these valves have been separate and have included many components.

The inventive valve assembly 36 comprises an integrated or one-piece anti-drain back valve 38 and relief valve 40. As best shown in Figures 2A and 2B, the valve assembly 36 extends continuously from a first terminal end 42 of the anti-drain back valve to a second terminal end 44 of the relief valve 40. In one example embodiment, the anti-drain back valve 38 includes a first annular lip 41 ending to the first terminal end 42. Similarly, the relief valve 40 includes a second annular lip 43 ending to the second terminal end 44. The terminal ends 42, 44 include enlarged portions that better enable the lips 41, 43 to seal against their respective scaling surfaces. A hole 37 in the valve assembly 36 permits fluid flow through the filter 10.

The valve assembly 36 includes an annular recess 48 separating the anti-drain back valve 38 and the relief valve 40. An end 50 of the center tube 24 is received in the recess 48. The valve assembly 36 in the area of the recess 48 forms a U-shaped portion forming a seal between the center tube 24 and tapping plate 16 preventing fluid from bypassing the filter assembly 18. In this manner, the valve assembly 36 eliminates the separate seal typically used between the center tube 24 and tapping plate 16.

Returning to Figure 1, the anti-drain back valve 38 is arranged adjacent to the aperture 32 in the retainer 14 and tapping plate 16. The anti-drain back valve is deflected upward to prevent fluid flow into the inlet side 28 of the filter 10. The terminal end 44 of the anti-drain back valve 38 seals against a raised portion of the tapping plate 16 to prevent fluid on the inlet side 28 from carrying debris from the filter media 22 out of the filter 10 during pressure drops.

The center tube 24 includes an opening 34. The relief valve 40 is arranged adjacent to the opening 34 for preventing fluid from bypassing the filter assembly 18 during normal operation. However, during conditions in which the fluid is very viscous such as during vehicle cold starts at low temperatures, it may be desirable to bypass the filter assembly 18 in which case the terminal end 42 is forced out of engagement with the inner surface 47 by the viscous, high pressure fluid.

The valve assembly 36 may be an elastomeric material such as a rubber. The pressures at which the valves 38 and 40 may be opened may be modified by using rubbers of different durometers or varying the thicknesses in desired areas of the valves 38 and 40 to change the opening characteristics of the valves 38 and 40. For example, the valves 38 and 40 respectively include "knees" 52, 54 that act as fulcrums. The locations, geometry, and thickness of the knees 52, 54 may be varied to change the opening characteristics.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A fluid filter comprising:
a housing having an end portion with a first aperture;
a center portion arranged in said housing and proximate to said end portion, said center portion including a second aperture; and
a valve assembly supported by said center portion and including a relief valve and an anti-drain back valve, said anti-drain back valve adjacent to said first aperture for selectively blocking said first aperture, and said relief valve adjacent to said second aperture for selective blocking said second aperture.

2. The fluid filter according to claim 1, wherein the valve assembly is an elastomeric material.

3. The fluid filter according to claim 1 or 2, wherein the relief and anti-drain back valves are integrally formed extending continuously from a first terminal end of said relief valve to a second terminal end of said anti-drain back valve.

4. The fluid filter according to claim 3, wherein said terminal ends each include enlarged portions respectively sealing against said end portion and center portion.

5. The fluid filter according to claim 3 or 4, wherein said center portion includes a radially inwardly extending flange adjacent to said terminal end of said relief valve.

6. The fluid filter according to any preceding claim, wherein said valve assembly includes a U-shaped portion defining a recess with an end of said center portion received in said recess, said recess separating said relief and anti-drain back portions.

7. The fluid filter according to claim 6, wherein said U-shaped portion seals against said end portion preventing fluid flow past said U-shaped portion between said first and second apertures.

8. The fluid filter according to any preceding claim, wherein the valve assembly includes a circular cross-section.

9. The fluid filter according to any preceding claim, including a filter element arranged within said housing and defining a central opening, said center portion comprising a center tube arranged within said central opening.

10. The fluid filter according to claim 9, wherein said relief valve seals against an inner surface of said center tube in a closed position.

11. The fluid filter according to claim 9, wherein a side of said filter element adjacent to said center tube is a fluid outlet side and said opposing side of said filter element is a fluid inlet side, said relief valve arranged between said fluid inlet and outlet sides at said first aperture, and said anti-drain back valve arranged between said second aperture and said fluid inlet side.

12. The fluid filter according to any preceding claim, wherein said end portion is a tapping plate including a threaded central aperture.

13. The fluid filter according to any preceding claim, wherein said relief and anti-drain back portions are formed by annular lips oriented transverse to one another.

14. A fluid filter valve comprising:
an elastomeric structure extending from a first terminal end to a second terminal end with an anti-drain back valve including said first terminal end and a relief valve including said second terminal end, said structure having a central hole arranged inwardly of said valves.

15. The fluid filter valve according to claim 14, including an annular recess separating said relief and anti-drain back valves.

16. The fluid filter valve according to claim 14 or 15, wherein said relief and anti-drain back valves include lips arranged transverse to one another.

17. The fluid filter valve according to claim 16, wherein said lips extend to said terminal ends with said terminal ends including enlarged portions.
